# EUROPEAN PATENT SPECIFICATION

(11) **EP 1 763 276 B1**
(45) Date of publication and mention of the grant of the patent: **24.05.2017**
(21) Application number: 06018885.1
(22) Date of filing: 08.09.2006
(51) Int. Cl.: H04W 88/06, H04M 3/42

(54) **Method for processing calls of multiple communication networks**
Verarbeitungsverfahren für Anrufe von mehreren Kommunikationsnetzen
Méthode de traitement d'appels d'une pluralité de réseaux de communication

(30) Priority: 12.09.2005 CN 200510099311; 07.02.2006 CN 200610033527
(43) Date of publication of application: 14.03.2007
(73) Proprietor: Yulong Computer Telecommunication Scientific, TianAn Cyberpark Chegongmiao Shenzhen (CN)
(72) Inventor: Xu, Yibo, Chegongmiao Shenzhen (CN); Liu, Bibo, Chegongmiao Shenzhen (CN); He, Chun, Chegongmiao Shenzhen (CN)
(74) Representative: Manitz Finsterwald Patentanwälte PartmbB

(56) References cited:
- WO-A1-00/27154
- WO-A1-2005/060179
- US-A- 6 011 909
- US-A1- 2005 153 773

## Description

### Field of the invention

The present invention relates to mobile communication technologies, more particularly to a method for processing calls from multiple communication networks and equipment thereof according to the preamble of claim 1. The features of the preamble of claim 1 are known from US 6 011 909 A. Related technology is also known from WO 2005/060179 A1.

### Background of the invention

Nowadays, there are more and more applications of multiple mode terminals, such as a GSM/CDMA dual mode terminal that supports both Global System for Mobile Communications (GSM) and Code Division Multiple Access (CDMA), a GSM/PHS dual mode terminal that supports both GSM and Personal Handset System (PHS), and so on.

According to the existing strategy to process calls of the dual mode terminal, the user can choose a first communication network for communications. When there is a new incoming call from a second communication network, the user can decide whether to answer the new incoming call; if the user chooses to answer the call, the previous call is maintained and the terminal is switched to the new call; otherwise, the new call is rejected.

Inside the dual mode terminal, it is the communication modules corresponding to the communication networks that process the calls. In accordance with the aforesaid call processing method, when answering the new incoming call from the second communication network, the dual mode terminal will send a call hold prompt tone to the communication module that processes the first communication network. Hereby the communication circuit of the first communication network is not released, in other words, the two communication modules are both in an operating state. Since the existing dual mode terminal adopts only one set of power management module, if the two communication modules are both operating simultaneously, electric current capacity of certain devices will be insufficient, and interference will take place between the two communication modules through the shared power management module. There also will be other problems.

Meanwhile, if both the two modules use high powers to transmit signals, there will be a corresponding problem of radio frequency interference. When the circuit of one system adopts a high power to transmit or receive signals, the circuit of the other system will not be able to operate normally because of the interference. Besides, in existing dual mode mobile terminals, the two communication modules are controlled by a shared control unit, which needs to give additional attention to functions like display and input. If the two communication networks operate at the same time, the processing speed will be decreased so that the utilization performance of the terminal will be affected.

### Summary of the invention

In view of the above, the present invention provides a method for processing multiple communication network calls as well as a dual mode terminal for implementing the method so that the utilization performance of the dual mode terminal is increased.

The specific technical solution in accordance with the present invention is as follows.

A method for processing calls from multiple communication networks, when a dial request of a first communication network initiated by a dual mode terminal is detected, comprises:
determining if there is an proceeding call service of a communication network other than the first communication network; if there is the proceeding call service of the communication network other than the first communication network, canceling the current dial request; otherwise
determining if there is an proceeding data service of the communication network other than the first communication network; if there is the proceeding data service of the communication network other than the first communication network, canceling the current dial request; otherwise, dialing according to a normal process.

Wherein, the first communication network is any one of:
a Global System for Mobile Communication (GSM) communication network, a Code Division Multiple Access (CDMA) communication network, a Personal Handset System (PHS) communication network and a 3^{rd} Generation (3G) communication network; and
the communication network other than the first communication network is any one of:
   a GSM communication network, a CDMA communication network, a PHS communication network and a 3G communication network.

Wherein, the step of detecting the dial request of the first communication network is:
detecting the dial request by determining whether a dial key is pressed.

By adopting the technical solution of the present invention, if there is a call or a data transmission of the dual mode terminal in the first communication network, while receiving a new incoming call from the second communication network, the dual mode terminal will choose between the new call and the original call or between the new call and the original data transmission, rather than maintaining the communications of both the two communication networks at the same time. Thus it is avoided that the two communication modules in the dual mode terminal proceed simultaneously.

### Brief description of the drawings

Figure 1 is a flowchart illustrating the active dialing process of the method for processing calls from multiple communication networks in accordance with an embodiment of the present invention;
Figure 2 is a flowchart illustrating the called process of the method for processing calls from multiple communication networks in accordance with an example for further understanding the present invention;
Figure 3 is a schematic diagram illustrating a dual mode mobile terminal in accordance with an example for further understanding the present invention;
Figure 4 is a schematic diagram illustrating the dual mode mobile terminal in accordance with an example for further understanding the present invention.

### Detailed Description of Embodiments

In order to make the object, the solution, and the merits of this invention clearer, a further description in detail is hereinafter given to this invention with reference to the accompanying drawings and embodiments.

The present invention discloses a method for processing calls from multiple communication networks in a dual mode terminal. The embodiments of the method will be illustrated hereinafter with reference to an active dialing process and a called process.

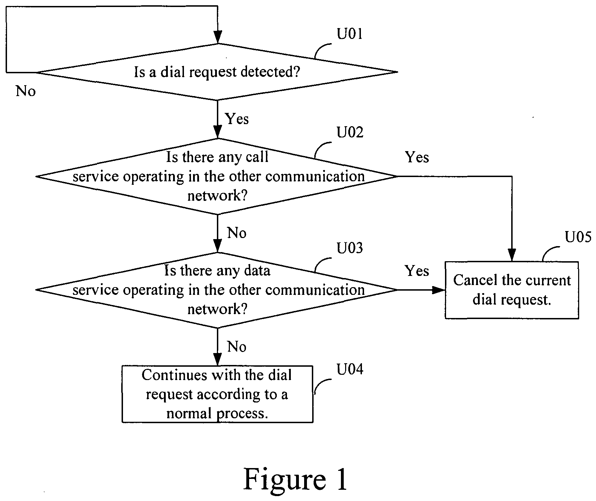

Figure 1 is a flowchart illustrating the method for processing calls from multiple communication networks in accordance with the embodiment the present invention when the dual mode terminal is actively initiating a dial. The caller, which is also the user, can choose any communication network to initiate a dial actively, herein the dial including a voice dial and a data dial.

Step U01: the dual mode terminal detects whether there is any dial request, if there is a dial request, proceeds to step U02, otherwise continues to execute step U01.

Therein, the procedure of detecting the dial request can be implemented by detecting whether a specific dial key in the terminal is pressed down.

Step U02: according to the dial request detected in step U01, the terminal determines the communication network corresponding to the dial request. The terminal further detects whether there is already any call service proceeding in the other communication network, if there is a call service proceeding in the other communication network, proceeds to step U05, otherwise, continues with step U03.

If there is already a call service proceeding in the other communication network, the dual mode terminal can further indicate that the communication function is busy and that the detected dial in step U01 cannot be continued before breaking the connection of the other communication network.

Step U03: the terminal checks if there is any data service proceeding in the other communication network, if there is a data service proceeding in the other communication network, proceeds to step U05, otherwise, continues with step U04.

If there is already a data service proceeding in the other communication network, the dual mode terminal can further indicate that the detected dial in step U01 cannot be continued before breaking the connection of the other communication network.

Step U04: the terminal handles the dial request according to a normal process.

Step U05: the terminal cancels the current dial request.

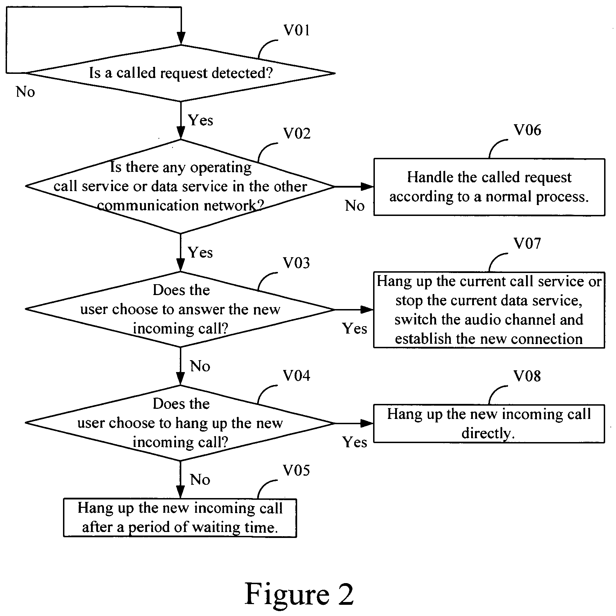

Figure 2 is a flowchart illustrating the method for processing calls from multiple communication networks in accordance with an example for further understanding the present invention when the dual mode terminal is called.

Step V01: the terminal detects whether there is any incoming call, if there is an incoming call, proceeds to step V02, otherwise, continues with step V01.

Step V02: according to the incoming call detected in step V01, the terminal determines the communication network corresponding to the incoming call, and determines whether there is already a call service or a data service proceeding in the other communication network. If there is already a call service or a data service proceeding in the other communication network, the terminal sends out an incoming call prompt tone and prompting the user on the interface to choose whether to answer or hang up the new incoming call, and then proceeds to step V03; if there is neither a call service nor a call service in the other communication network, the terminal proceeds to step V06.

Step V03: the terminal determines whether the user chooses to answer the new incoming call. If the user chooses to answer the new incoming call, proceeding to step V07; if the user does not choose to answer the new incoming call, proceeds to step V04. Herein if there is already a data service in the other communication network previously, the previous data service will be continued.

In step V03, the procedure of detecting whether the user chooses to answer the new incoming call can be implemented by detecting whether a specific answer key is pressed down.

Step V04: the terminal determines whether the user directly hangs up the new incoming call; if the user chooses to hang up the new incoming call directly, proceeding to step V08, if the user makes no choice all the time, proceeding to step V05.

In step V04, the procedure of detecting whether the user directly hangs up the new incoming call can be implemented by detecting whether the specific hang-up key in the terminal is pressed down.

Step V05: the dual mode terminal automatically hangs up the new incoming call after waiting for a certain period of waiting time

The period of waiting time is preset.

Step V06: the terminal handles the incoming call according to the normal process.

Step V07: the current call service of the other communication network is hanged up, or the data service of the other communication network is stopped and the network connection is disconnected; and then the audio channel is switched and the audio channel of the communication module corresponding to the new incoming call is connected to a voice effect card and a microphone.

Step V08: the new incoming call is hanged up directly.

As is described above, when applying the method for processing calls from multiple communication networks in accordance with this example for understanding the present invention, the current communication status of the other communication network is detected before both the calling process and the called process so as to prevent the two networks from proceeding simultaneously. Therefore, by adopting this example, the function of communicating in multiple networks is realized, while preventing the two or more communication modules from being in the proceeding state at the same time, which will lead to problems such as radio interference and excessive loads of electric current.

In order to implement the aforesaid method for processing calls from multiple communication networks, new modules should be added to the existing dual mode terminal.

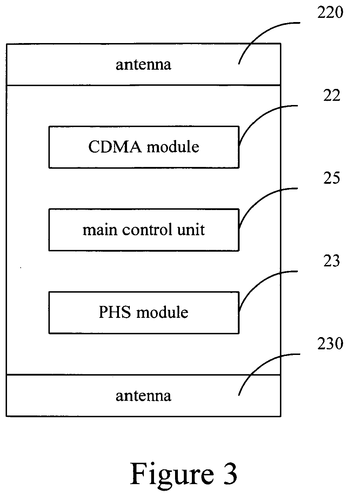

Figure 3 is a schematic diagram illustrating a dual mode mobile terminal in accordance with an example for further understanding the present invention.

In this example, the dual mode mobile terminal adopts a combination of a CDMA module 22 corresponding to a CDMA communication network and a PHS module 23 corresponding to a PHS communication network, and a main control unit 25 takes charge of the control of the CDMA module 22 and the PHS module 23.

CDMA module 22 and PHS module 23 are respectively connected to an antenna 220 and an antenna 230, which are located at two sides of the dual mode mobile terminal. Therein, the main control unit 25 is used to schedule the CDMA module 22 and the PHS module 23.

Especially, in this example, the antenna 220 is set on the top of the main board while the antenna 230 is set at the bottom of the main board, or the antenna 220 is set at the front of the main board while the antenna 230 is set at the back of the main board, so that the two antennae 220 and 230 is apart form each other for a certain distance, which can enhance the frequency band isolation and make the other systems interference-proof from an proceeding system.

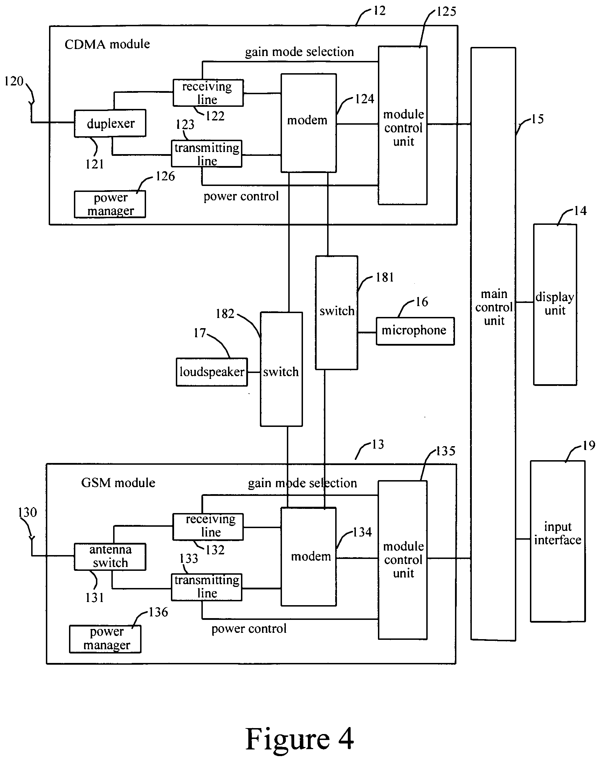

Figure 4 is a schematic diagram illustrating a dual mode mobile terminal in accordance with an example for further understanding the present invention.

In this example, the dual mode mobile terminal comprises a CDMA module 12 corresponding to a CDMA communication network and a GSM module 13 corresponding to a GSM communication network. Module control units 125 and 135 are respectively set in the CDMA module 12 and the GSM module 13, the module control units 125 and 135 respectively take charge of controlling the CDMA module 12 and the GSM module 13. Besides, the CDMA module 12 and GSM module 13 share peripheral equipment like a display unit 14, a microphone 16, a loudspeaker 17, an input interface 19 and so on.

The CDMA module 12 comprises a duplexer 121, a receiver 122, a transmitter 123 and a modem 124. The GSM module 13 comprises an antenna switch 131, a receiver 132, a transmitter 133 and a modem 134. In this example, existing mature communication modules corresponding to the communication networks are preferably adopted. The communication modules are completely independent from one another and have their respective shields so that the interference among components of the two modules is very weak. Moreover, the communication modules are connected to the main board in form of socket connectors so that the communication modules and the main board are strictly separated, which makes it convenient for maintenance and update.

The CDMA module 12 and the GSM module 13 utilize respectively an antenna 120 and an antenna 130, which are respectively set at two sides of the dual mode mobile terminal, e.g. top and bottom of the dual mode mobile terminal or front and back of the dual mode mobile terminal. Besides, the polarization direction of the antenna 120 and the antenna 130 are orthogonal. For instance, the antenna 120 adopts a horizontal polarization and the antenna 130 adopts a vertical polarization; or the antenna 120 adopts a vertical polarization and the antenna 130 adopts a horizontal polarization. Since the horizontal polarized antenna can only receive or transmit horizontal polarized wave while the vertical polarized antenna can only receive or transmit vertical polarized wave, there is no interference among signals received or transmitted by the antennae with polarization directions orthogonal to each other, thus the frequency band isolation is implemented and the communication is normally performed. Therefore, the CDMA module 12 and the GSM module 13 can operate at the same time efficiently without the interference between each other.

In the same way, the antenna 120 and the antenna 130 can be isolated by adopting a ±45° polarization, namely one antenna adopts a +45°polarization and the other antenna adopts a -45° polarization, there is also the polarization isolation between the two antennae.

When the antenna 120 or the antenna 130 receives a call from the communication network, the module control unit 125 or the module control unit 135 notifies the user about the call. If the user chooses to answer the received call, the module control unit 125 or the module control unit 135 sends a microphone control signal and a loudspeaker control signal to a switch 181 and a switch 182, connects the modem of the corresponding communication module to the microphone 16 and the loudspeaker 17, so that the call can be implemented normally.

For example, when the GSM module 13 is in the communication state and the CDMA module 12 receives the call request, the operation process of each module processing the calls from multiple networks will be illustrated hereinafter. When the GSM module 13 is in the communication state, if the CDMA module 12 receives the call request, the module control unit 125 can notify the user of the call request by way of voice prompt, vibration, interface prompt and so on so that the user can choose to terminate the call or cancel the call through the input interface.

If the user chooses to terminal the call, the module control unit 135 controls the GSM module 13 to send a call terminate message to the GSM network to terminate the call of the current network. And then the module control unit 135 controls the switch 181 and the switch 182 to connect the microphone 16 and the loudspeaker 17 to the modem 124 of the CDMA module 12; and the CDMA module 12 establishes the communication connection between the dual mode terminal and the CDMA network.

If the user chooses to cancel the call, the module control unit 125 controls the CDMA module 12 to send a call establish failure message to the CDMA network and continues with the current communication.

In this example, the main control unit 15 takes charge of scheduling the module control unit 125 of the CDMA module 12 and the module control unit 135 of the GSM module 13 as well as processing display, keyboard input and other function applications. It should be noted that the main control unit 15 will send AT instructions to the module control units 125 and 135 rather than directly send control signals to the GSM module 13 or the CDMA module 12, so that the module control units 125 and 135 can send control signals to the GSM module 13 and the CDMA module 12 respectively and perform power control. By utilizing of the three control units to function harmoniously it can expedite the response performance of the dual mode mobile terminal.

Alternatively, the main control unit 15 can be combined with anyone of the CDMA module control unit 125 and the GSM module control unit 135. If the main control unit 15 is combined with the CDMA module control unit 125, the main control unit 15 directly sends control signals to the CDMA module 12; the main control unit 15 also sends AT instructions to the GSM module control unit 135 so that the GSM module control units 135 can send control signals to the GSM module 13. If the main control unit 15 is combined with the GSM module control unit 135, the main control unit 15 directly sends control signals to the GSM module 13; the main control unit 15 also sends AT instructions to the CDMA module control unit 125 so that the CDMA module control units 125 can send control signals to the CDMA module 12.

In addition, the power management modules 126 and 136 are respectively set in the CDMA module 12 and the GSM module 13 additionally. Adopting the separate power management modules can avoid the problem of the insufficient electric current capacity as well as the problem of the interference between the CDMA module 12 and the GSM module 13 caused by the shared power management module.

The Antennae 120 and 130 can be either the external antennae or the internal antennae.

The present invention is described exemplarily in detain as above with reference to the combination of the GSM communication network and the CDMA communication network as well as with reference to the combination of the CDMA communication network and the PHS communication network. However, those skilled in the art should understand that the present invention is also applicable for the dual mode mobile terminal or the multi-mode mobile terminal in any combination of the GSM communication network, the CDMA communication network, the PHS communication network, the 3G communication network and so on, e.g. the mobile terminal in a combination of dual GSM, of in a combination of GSM and PHS, or in a combination of GSM and 3G, etc. Besides, the present invention is also applicable for the dual mode mobile terminal or the multi-mode mobile terminal that has other circuit structures.

## Claims

1. A method for processing calls from multiple communication networks, **characterized in that**, when a dial request of a first communication network initiated by a dual mode terminal is detected (U01), the method comprises:
determining if there is a proceeding call service of a communication network other than the first communication network (U02); if there is the proceeding call service of the communication network other than the first communication network, canceling the current dial request (U05); otherwise
determining if there is a proceeding data service of the communication network other than the first communication network (U03); if there is the proceeding data service of the communication network other than the first communication network, canceling the current dial request (U05); otherwise, dialing according to a normal process (U04).

2. The method according to claim 1, wherein, the first communication network is any one of:
a Global System for Mobile Communication (GSM) communication network, a Code Division Multiple Access (CDMA) communication network, a Personal Handset System (PHS) communication network and a 3^{rd} Generation (3G) communication network; and
the communication network other than the first communication network is any one of:
a GSM communication network, a CDMA communication network, a PHS communication network and a 3G communication network.

3. The method according to claim 1, wherein the step of detecting the dial request of the first communication network is:
detecting the dial request by determine whether a dial key is pressed.

## Patentansprüche

1. Verfahren zum Verarbeiten von Anrufen aus mehreren Kommunikationsnetzwerken, **dadurch gekennzeichnet, dass** das Verfahren dann, wenn eine Wählanforderung von einem ersten Kommunikationsnetzwerk, die von einem Endgerät mit zwei Modi eingeleitet wurde, detektiert wird (U01), umfasst, dass:
festgestellt wird, ob es einen fortschreitenden Anrufdienst von einem anderen Kommunikationsnetzwerk als dem ersten Kommunikationsnetzwerk gibt (U02); wenn es den fortschreitenden Anrufdienst von dem anderen Kommunikationsnetzwerk als dem ersten Kommunikationsnetzwerk gibt, die aktuelle Wählanforderung abgebrochen wird (U05); andernfalls
festgestellt wird, ob es einen fortschreitenden Datendienst von dem anderen Kommunikationsnetzwerk als dem ersten Kommunikationsnetzwerk gibt (U03); wenn es den fortschreitenden Datendienst von dem anderen Kommunikationsnetzwerk als dem ersten Kommunikationsnetzwerk gibt, die aktuelle Wählanforderung (U05) abgebrochen wird; andernfalls in Übereinstimmung mit einem normalen Prozess gewählt wird (U04).

2. Verfahren nach Anspruch 1,
wobei das erste Kommunikationsnetzwerk ein beliebiges ist von:
einem Kommunikationsnetzwerk eines globalen Systems zur mobilen Kommunikation (GSM-Kommunikationsnetzwerk), einem Kommunikationsnetzwerk mit Codemultiplex-Vielfachzugriff (CDMA-Kommunikationsnetzwerk), einem Kommunikationsnetzwerk mit einem persönlichen Handapparatsystem (PHS-Kommunikationsnetzwerk) und einem Kommunikationsnetzwerk der dritten Generation (3G-Kommunikationsnetzwerk); und
das andere Kommunikationsnetzwerk als das erste Kommunikationsnetzwerk ein beliebiges ist von:
einem GSM-Kommunikationsnetzwerk, einem CDMA-Kommunikationsnetzwerk, einem PHS-Kommunikationsnetzwerk und einem 3G-Kommunikationsnetzwerk.

3. Verfahren nach Anspruch 1,
wobei der Schritt des Detektierens der Wählanforderung von dem ersten Kommunikationsnetzwerk ist:
dass die Wählanforderung detektiert wird, indem festgestellt wird, ob eine Wähltaste gedrückt wird.

## Revendications

1. Procédé de traitement d'appels provenant de multiples réseaux de communication, **caractérisé en ce que**, lorsqu'est détectée une demande de numérotation d'un premier réseau de communication, qui est lancée par un terminal bimode, (U01), le procédé comprend les étapes consistant à :
déterminer s'il existe un service d'appel en cours sur un réseau de communication autre que le premier réseau de communication (U02) ; s'il existe un service d'appel en cours sur le réseau de communication autre que le premier réseau de communication, annuler la demande de numérotation courante (U05) ; sinon :
déterminer s'il existe un service de données en cours sur le réseau de communication autre que le premier réseau de communication (U03) ; s'il existe un service de données en cours sur le réseau de communication autre que le premier réseau de communication, annuler la demande de numérotation courante (U05) ; sinon, numéroter selon un traitement normal (U04).

2. Procédé selon la revendication 1, dans lequel le premier réseau de communication est l'un quelconque des suivants :
réseau de communication GSM (pour « *Global System for Mobile communication* » - Système mondial de communication mobile), réseau de communication CDMA (pour « *Code Division Multiple Access* » - Accès multiple à répartition par code), réseau de communication PHS (pour « *Personal Handset System* » - Système de terminal personnel) et réseau de communication de la 3^{e} génération (3G) ; et
le réseau de communication autre que le premier réseau de communication est l'un quelconque des suivants :
réseau de communication GSM, réseau de communication CDMA, réseau de communication PHS et réseau de communication 3G.

3. Procédé selon la revendication 1, dans lequel l'étape de détection de la demande de numérotation sur le premier réseau de communication consiste à :
détecter la demande de numérotation en déterminant si une touche de numérotation est actionnée.
